# EUROPÄISCHE PATENTANMELDUNG

(11) **EP 0 897 846 A2**
(43) Veröffentlichungstag der Anmeldung: **24.02.1999**
(21) Anmeldenummer: 98115360.4
(22) Anmeldetag: 14.08.1998
(51) Int. Cl.: B60T 17/16, B60T 7/04

(54) **Bremssystem für ein Fahrzeug**

(30) Priorität: 20.08.1997 DE 19736230
(71) Anmelder: STILL GMBH, D-22113 Hamburg (DE)
(72) Erfinder: Schröder, Werner-Georg, Ing.-MSc., 63762 Grossostheim (DE); Tügel, Caspar, Dipl.-Ing., 20253 Hamburg (DE)
(74) Vertreter: Kasseckert, Rainer

(57) **Zusammenfassung**

Gegenstand der Erfindung ist ein Bremssystem für ein Fahrzeug, insbesondere für ein Flurförderzeug. Eine Bremse steht mit einem Kraftspeicher, vorzugsweise einem Federspeicher, in Wirkverbindung und ist mittels der Kraft des Kraftspeichers betätigbar (Parkbremse). Die selbe Bremse ist mittels einer von einer Bedienperson direkt oder indirekt erzeugbaren Stellkraft betätigbar (Betriebsbremse). Erfindungsgemäß ist der Kraftspeicher (2) mittels einer von der Stellkraft (F) abgeleiteten Kraft in einen vorgespannten Zustand überführbar, in dem die Bremse (B) durch den Kraftspeicher (2) nicht betätigt ist. Der Kraftspeicher (2) ist in dem vorgespannten Zustand arretierbar.

## Beschreibung

Die Erfindung betrifft ein Bremssystem für ein Fahrzeug, insbesondere für ein Flurförderzeug, wobei eine Bremse mit einem Kraftspeicher, vorzugsweise einem Federspeicher, in Wirkverbindung steht und mittels der Kraft des Kraftspeichers betätigbar ist, und die selbe Bremse mittels einer von einer Bedienperson direkt oder indirekt erzeugbaren Stellkraft betätigbar ist.

Bei Bremssystemen dieser Art werden mit der selben Bremse die Funktionen einer Parkbremse und einer Betriebsbremse des Fahrzeugs erfüllt. Für die Betriebsbremse kann von der Bedienperson mittels eines Bremshebels oder eines Bremspedals eine Stellkraft der Bremse willkürlich erzeugt werden. Die Bremskraft der Betriebsbremse ist abhängig von der Größe der Stellkraft.

Die Bremse ist weiterhin mittels eines Kraftspeichers betätigbar, was der Funktion der Parkbremse entspricht. Diese Funktion wird selbsttätig, beispielsweise bei einem Ausschalten des Fahrzeugs, oder willkürlich durch die Bedienperson mittels eines Bedienelements betätigt. Die Bremskraft der Parkbremse ist durch den Kraftspeicher vorgegeben und kann in der Regel nicht variiert werden.

Zum Lösen der Parkbremse muß die auf die Bremse wirkende Kraft des Kraftspeichers überwunden werden. Bei gelöster Parkbremse befindet sich der Kraftspeicher in einem vorgespannten Zustand. Bekannte Bremssysteme weisen zum Überwinden der Kraft des Kraftspeichers aufwendige Vorrichtungen auf, die beispielsweise einen Elektromagnet oder eine aufwendige hydraulische Vorrichtung beinhalten.

Der vorliegenden Erfindung liegt die Aufgabe zugrunde, ein Bremssystem für ein Fahrzeug zur Verfügung zu stellen, das eine einfach aufgebaute, betriebssichere Vorrichtung zum Lösen der Parkbremse aufweist.

Diese Aufgabe wird erfindungsgemäß dadurch gelöst, daß der Kraftspeicher mittels einer von der Stellkraft abgeleiteten Kraft in einen vorgespannten Zustand überführbar ist, in dem die Bremse durch den Kraftspeicher nicht betätigt ist. Erfindungsgemäß wird somit die Kraft zum Lösen der Parkbremse von der Stellkraft der Betriebsbremse abgeleitet. Diese Anordnung beinhaltet den wesentlichen Vorteil, daß auf zusätzliche krafterzeugende Bauteile, beispielsweise einen Elektromagnet, verzichtet werden kann. Ein weiterer Vorteil ergibt sich daraus, daß die Stellkraft, und damit die Kraft zum Lösen der Parkbremse, von der Bedienperson aktiv erzeugt wird. Ein unbeabsichtigtes Lösen der Parkbremse ist somit ausgeschlossen.

Gemäß einer Weiterbildung der Erfindung ist der Kraftspeicher in dem vorgespannten Zustand arretierbar. Wenn der Kraftspeicher im vorgespannten Zustand arretiert ist, erfüllt die Bremse die Funktion der Betriebsbremse. Wenn die Arretierung gelöst wird, fällt die Bremse in der Funktion als Parkbremse durch die Kraft des Kraftspeichers automatisch ein.

Vorteilhafterweise ist ein von einer Bedienperson betätigbares Schaltelement vorgesehen, das mit Mitteln zum Arretieren des Kraftspeichers in Wirkverbindung steht.

Zweckmäßigerweise ist zur Aufnahme der Stellkraft ein Bremspedal und/oder ein Bremshebel vorgesehen.

Gemäß einer vorteilhaften Ausgestaltung der Erfindung ist zum Übertragen der Stellkraft auf die Bremse mindestens ein Hydraulikzylinder vorgesehen. Der Druck im Hydraulikzylinder wird von der Bedienperson über das Bremspedal bzw. den Bremshebel reguliert. Die Bremskraft einer Betriebsbremsung, die von der Stellkraft abhängt, ist somit steuerbar.

Ebenso zweckmäßig ist es, wenn zum Überführen des Kraftspeichers in den vorgespannten Zustand mindestens ein Hydraulikzylinder vorgesehen ist. Die Druckkraft dieses Hydraulikzylinders, welche die Kraft des Kraftspeichers überwindet, kann ebenfalls mittels des Bremspedals bzw. des Bremshebels gesteuert werden.

Gemäß einer besonders vorteilhaften Weiterbildung der Erfindung weisen der Hydraulikzylinder zum Überführen des Kraftspeichers in den vorgespannten Zustand und der Hydraulikzylinder zum Übertragen der Stellkraft auf die Bremse einen gemeinsamen Druckraum auf. Die beiden Hydraulikzylinder können somit ein gemeinsames Zylindergehäuse aufweisen, in welchem zwei sich in entgegengesetzte Richtung bewegende Kolben angeordnet sind.

Mit besonderem Vorteil ist als Mittel zum Arretieren des Kraftspeichers mindestens ein schaltbares hydraulisches Ventil vorgesehen. Mit dem hydraulischen Ventil kann das Abfließen von Öl aus dem mit dem Kraftspeicher verbundenen Hydraulikzylinder verhindert werden. Bei geschlossenem Ventil ist somit der Kraftspeicher in vorgespanntem Zustand arretiert.

Weitere Vorteile und Einzelheiten der Erfindung werden anhand der in den schematischen Figuren dargestellten Ausführungsbeispiele näher erläutert. Dabei zeigt
- Fig. 1a,b: ein erfindungsgemäßes Bremssystem mit mechanischer Arretiervorrichtung,
- Fig. 2a,b: ein erfindungsgemäßes Bremssystem mit hydraulischer Arretiervorrichtung,
- Fig. 3: ein hydraulisch betätigbares, erfindungsgemäßes Bremssystem mit hydraulischer Arretiervorrichtung,
- Fig. 4: ein hydraulisch betätigbares, erfindungsgemäßes Bremssystem mit mechanischer Arretiervorrichtung.

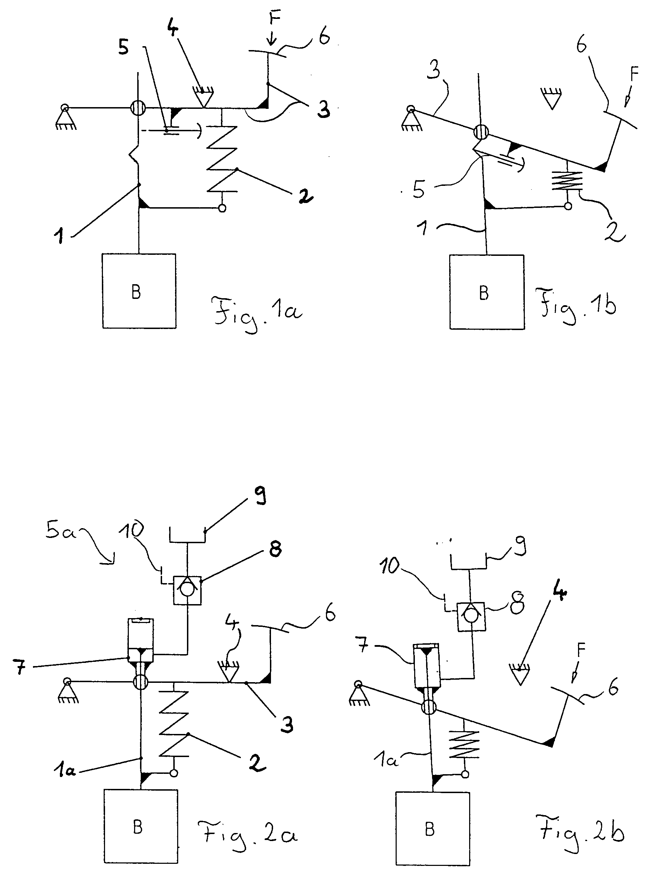

Figur 1a zeigt ein erfindungsgemäßes Bremssystem. Eine nicht näher ausgeführte Bremse B ist mittels der Druckstange 1 betätigbar, wobei ein Herunterdrücken der Druckstange ein Einfallen der Bremse B bewirkt. Die Bremse B kann beispielsweise als Trommelbremse, Backenbremse, Scheibenbremse oder Bandbremse ausgeführt sein.

Die Druckstange 1 ist mit einem Energiespeicher 2, in diesem Ausführungsbeispiel einer Druckfeder, verbunden, die sich an einem Hebel 3 abstützt. Der Hebel 3 wiederum stützt sich in dem in Fig. 1a dargestellten Betriebszustand an einem Anschlag 4 ab. Die Druckstange 1 ist in dem Hebel 3 längsverschiebbar und winkelbeweglich geführt.

Fig. 1a zeigt die Bremse in ihrer Funktion als betätigte Parkbremse. Die sich an dem Anschlag 4 abstützende Druckkraft des Kraftspeichers 2 wird über die Druckstange 1 in die Bremse B eingeleitet. Von außen wirken hierbei keinerlei Betätigungskräfte auf das Bremssystem. Die Bremskaft ist durch die Kraft des Energiespeichers 2 festgelegt.

Wenn, ausgehend von diesem Betriebszustand, das an dem Hebel 3 angeordnete Bremspedal 6 mit einer Stellkraft F nach unten gedrückt wird, wird der Kraftspeicher 2 gespannt und somit zunächst die auf die Druckstange wirkende Druckkraft und damit die Bremskraft erhöht.

Nun befindet sich der Kraftspeicher, wie in Fig. 1b dargestellt, in einem vorgespannten Zustand. In diesem Zustand kann der Hebel 3 gegenüber der Druckstange 1 mittels einer in diesem Ausführungsbeispiel mechanisch wirkenden Arretiervorrichtung 5 arretiert werden. Die Druckstange 1 ist dann, wie in Fig. 1b erkennbar, starr mit dem Hebel 3 verbunden.

Wenn nun auf das Bremspedal 6 keine Betätigungskraft mehr wirkt, wird die Druckkraft des Kraftspeichers 2 über die starre Verbindung direkt von Druckstange 1 und Hebel 3 aufgenommen. In diesem Zustand wirkt somit auf die Bremse B keine Kraft, so daß die Bremse B gelöst ist.

Eine auf das Bremspedal 6 ausgeübte Stellkraft F wird hingegen über den Hebel 3, die Arretiervorrichtung 5 und die Druckstange 1 direkt in die Bremse B geleitet. Die Bremse B steht somit als willkürlich betätigbare Betriebsbremse zur Verfügung.

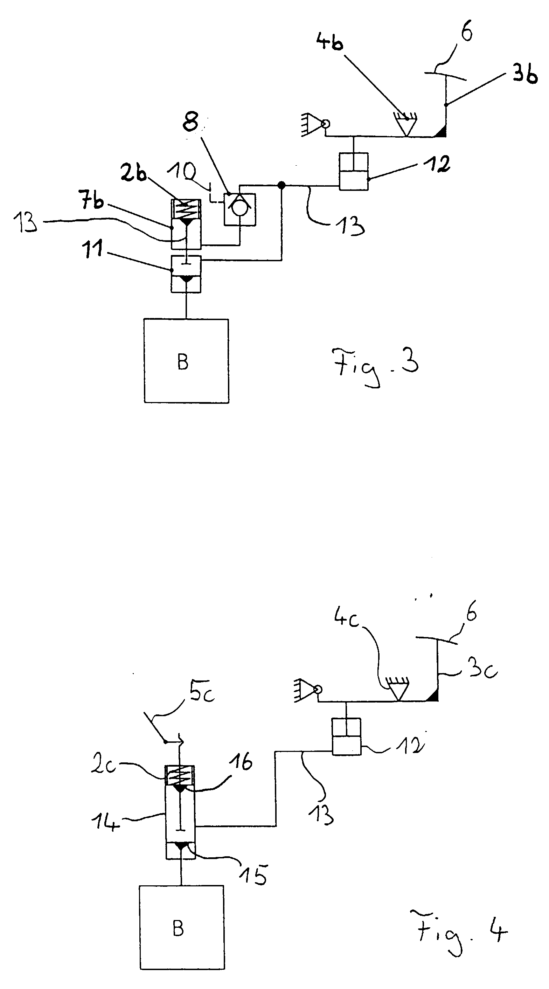

Eine hinsichtlich der Bremsbetätigung identische Bremsenanordnung ist in den Figuren 2a und 2b dargestellt. Die Arretiervorrichtung 5a ist in diesem Ausführungsbeispiel hydraulisch ausgeführt und weist einen Hydraulikzylinder 7, ein entsperrbares Ventil 8 und einen Ausgleichsbehälter 9 für Hydraulikflüssigkeit auf.

Die Druckstange 1a ist hierbei mit einem Kolben des Hydraulikzylinders 7 verbunden, während ein Zylindergehäuse des Hydraulikzylinders 7 an dem Hebel 3 befestigt ist. Wenn, wie in Fig. 2a dargestellt, die Bremse B in der Funktion als Parkbremse betätigt ist, stützt sich der Kraftspeicher 2 einerseits an dem Anschlag 4 und andererseits über die Druckstange 1a an der Bremse B ab.

Um die Parkbremse zu lösen, wird eine Stellkraft F auf das Bremspedal 6 ausgeübt. Bei dem Vorspannen des Kraftspeichers bewegt sich das Zylindergehäuse gegenüber dem Kolben nach unten, wobei Hydraulikflüssigkeit durch das gegenüber dieser Strömungsrichtung durchgängige Ventil 8 in den Zylinderraum einströmt. Wenn sich das Zylindergehäuse in der in Fig. 2b dargestellten untersten Position befindet, ist eine starre Verbindung zwischen der Druckstange 1a und dem Hebel 3 hergestellt, da durch das Ventil 8 eine Bewegung des Zylindergehäuses nach oben, bei der Hydraulikflüssigkeit aus dem Hydraulikzylinder 7 in den Ausgleichsbehälter 9 strömen würde, verhindert ist. Das Bremssystem kann nun mittels des Bremspedals 6 als Betriebsbremse gesteuert werden, wobei die Bremskraft der Bremse B direkt von der Stellkraft F des Bremspedals 6 abhängt.

Um ausgehend von dieser Betriebssituation wieder die Parkbremse zu betätigen, wird das Ventil 8 durch ein entsprechendes mit der Signalleitung 10 übertragenes Signal entsperrt, wodurch nun Hydraulikflüssigkeit aus dem Hydraulikzylinder entströmen kann und der Hebel 3 durch die Kraft des Kraftspeichers bis zum Anschlag 4 nach oben gedrückt wird.

Figur 3 zeigt ein hydraulisch betätigbares erfindungsgemäßes Bremssystem mit hydraulischer Arretiervorrichtung. Das Bremssystem ist in seiner Funktion als Betriebsbremse dargestellt. Der Hebel 3b ist mit einem Hauptbremszylinder 12 verbunden, womit der Druck in der Leitung 13 gesteuert wird. Die auf die Bremse wirkende Druckkraft wird mit dem Bremszylinder 11 erzeugt, der mit der Leitung 13 verbunden ist. Der Kraftspeicher 2b ist in der gezeigten Betriebssituation mittels des Ventils 8 in vorgespannter Stellung arretiert.

Wenn ausgehend von dieser Betriebssituation die Parkbremse betätigt werden soll, wird das Ventil 8 durch ein entsprechendes mit der Signalleitung 10 übertragenes Signal entsperrt. Der Kraftspeicher 2b drückt daraufhin einen Kolben 13 des Hydraulikzylinders 7b nach unten, wobei Hydrauliköl durch das Ventil 8 aus dem Hydraulikzylinder 7b, beispielsweise in einen nicht dargestellten Ausgleichsbehälter abströmt.

Ein in den Bremszylinder 11 ragender Fortsatz des Kolbens des Hydraulikzylinders 7b drückt dabei mit der Kraft des Kraftspeichers 2b auf den Kolben des Bremszylinders 11. Diese Funktion einer Parkbremse kann durch Drücken des Pedals 6 wieder gelöst werden, wobei der mit dem Hauptbremszylinder 12 erzeugte Hydraulikdruck, von dem während einer Betriebsbremsung die Bremskraft der Bremse abhängt, den Kolben des Hydraulikzylinders 7b nach oben drückt.

Figur 4 zeigt ein entsprechendes Bremssystem mit einer mechanischen Arretiervorrichtung. Der Bremszylinder 11 weist zwei Kolben 15, 16 auf. Bei einer Betriebsbremsung wird die von der Bedienperson einstellbare Bremskraft mittels des auf die Bremse B drückenden Kolbens 15 erzeugt. Der Kolben 16 spannt dabei den Kraftspeicher 2c vor und ist mittels der Arretiervorrichtung 5c festgelegt.

Bei einem Lösen der Arretiervorrichtung drückt der Kraftspeicher 2c den Fortsatz des Kolbens 16 auf den Kolben 15, der diese Kraft auf die Bremse B überträgt. Ein Lösen einer solchen Parkbremsung erfolgt durch Betätigen des Bremspedals und anschließendem Arretieren des Kolbens 16 in seiner obersten Stellung.

## Patentansprüche

1. Bremssystem für ein Fahrzeug, insbesondere für ein Flurförderzeug, wobei eine Bremse mit einem Kraftspeicher, vorzugsweise einem Federspeicher, in Wirkverbindung steht und mittels der Kraft des Kraftspeichers betätigbar ist, und die selbe Bremse mittels einer von einer Bedienperson direkt oder indirekt erzeugbaren Stellkraft betätigbar ist, **dadurch gekennzeichnet**, daß der Kraftspeicher (2) mittels einer von der Stellkraft (F) abgeleiteten Kraft in einen vorgespannten Zustand überführbar ist, in dem die Bremse (B) durch den Kraftspeicher (2) nicht betätigt ist.

2. Bremssystem nach Anspruch 1, dadurch gekennzeichnet, daß der Kraftspeicher (2) in dem vorgespannten Zustand arretierbar ist.

3. Bremssystem nach Anspruch 1 oder 2, dadurch gekennzeichnet, daß ein von einer Bedienperson betätigbares Schaltelement vorgesehen ist, das mit Mitteln zum Arretieren des Kraftspeichers (2) in Wirkverbindung steht.

4. Bremssystem nach einem der Ansprüche 1 bis 3, dadurch gekennzeichnet, daß zur Aufnahme der Stellkraft ein Bremspedal (6) und/oder ein Bremshebel vorgesehen ist.

5. Bremssystem nach einem der Ansprüche 1 bis 4, dadurch gekennzeichnet, daß zum Übertragen der Stellkraft (F) auf die Bremse (B) mindestens ein Hydraulikzylinder (11, 14) vorgesehen ist.

6. Bremssystem nach einem der Ansprüche 1 bis 5, dadurch gekennzeichnet, daß der Hydraulikzylinder (14) zum Überführen des Kraftspeichers in den vorgespannten Zustand und der Hydraulikzylinder (14) zum Übertragen der Stellkraft (F) auf die Bremse (B) einen gemeinsamen Druckraum aufweisen.

7. Bremssystem nach einem der Ansprüche 1 bis 6, dadurch gekennzeichnet, daß als Mittel zum Arretieren des Kraftspeichers (2) mindestens ein schaltbares hydraulisches Ventil (8) vorgesehen ist.
